Europäisches Patentamt

European Patent Office

Office européen des brevets

(11) Veröffentlichungsnummer: **0 396 880**

**A1**

## (12) EUROPÄISCHE PATENTANMELDUNG

(21) Anmeldenummer: 90105068.2

(22) Anmeldetag: 17.03.90

(51) Int. Cl.⁵: **H01F 1/053, H01F 41/02**

(30) Priorität: 12.05.89 DE 3915446

(43) Veröffentlichungstag der Anmeldung:
14.11.90 Patentblatt 90/46

(84) Benannte Vertragsstaaten:
AT DE ES FR GB NL

(71) Anmelder: **Krupp Widia GmbH**
**Münchener Str. 90**
**D-4300 Essen 1(DE)**

(72) Erfinder: **Ervens, Wilhelm,**
**Dr.rer.nat.Dipl.-Phys.**
**Helgolandring 13**
**D-4300 Essen 1(DE)**
Erfinder: **Jostes, Manfred**
**Humboldtstrasse 55**
**D-4300 Essen 1(DE)**

(74) Vertreter: **Vomberg, Friedhelm, Dipl.-Phys.**
**Schulstrasse 8**
**D-5650 Solingen 1(DE)**

(54) **NdFeB-Magnet und Verfahren zur Oberflächenpassivierung von NdFeB-Magneten.**

(57) Die Erfindung betrifft einen NdFeB-Magneten und ein Verfahren zur Oberflächenpassivierung von Neodym-Eisen-Bor-Dauermagneten. Zur Verhinderung von Korrosionen wird vorgeschlagen, den Magnet mit einer $\alpha$-$Fe_2O_3$-Beschichtung einer Dicke zwischen 0,5 und 5 $\mu$m zu versehen. Hierzu wird der vorzugsweise geschliffene Magnet einer Glühbehandlung in oxidierender Atmosphäre bei Temperaturen zwischen 600 °C und der Sintertemperatur ausgesetzt.

EP 0 396 880 A1

## NdFeB-Magnet und Verfahren zur Oberflächenpassivierung von NdFeB-Magneten

Die Erfindung betrifft èinen NdFeB-Magnet und ein Verfahren zur Oberflächenpassivierung von Neodym-Eisen-Bor-Dauermagneten.

Dauermagneten auf der Basis von NdFeB kommt seit wenigen Jahren eine zunehmend technische und wirtschaftliche Bedeutung zu. Grund für diese schnelle Entwicklung sind die gegenüber allen bisherigen Dauermagnetwerkstoffen hervorragenden Werte dieser Werkstoffgruppe und ihre im Vergleich zu den SmCo-Magneten verfügbareren und kostengünstigeren Rohstoffe. So ist der Neodymanteil in den Seltenerdmetallerzen 7 bis 16 mal so hoch wie der des Samariums; zudem enthält der Werkstoff Eisen anstelle des teureren Kobalts. Infolge der hohen Eisen- und Neodym-Anteile der NdFeB-Magnete neigen diese Werkstoffe in feuchter Atmosphäre oder nach Betauung leicht zur Rostbildung. Hierin unterscheiden sie sich deutlich von den SmCo-Materialien. In feuchter Umgebung bildet sich auf den Magnetoberflächen ein aufbauender Rost, der die Funktion von Magnetsystemen, z.B. bei engen Arbeitsluftspalten, beeinträchtigen kann. Gegen das Rosten lassen sich NdFeB-Magnete durch Beschichten der Oberfläche schützen. Solche Oberflächenschichten werden nach dem Stand der Technik galvanisch, chemisch oder physikalisch in Schichtdicken von 10 bis 40 $\mu$m aufgetragen.

Alternativ zu den metallischen Schichten lassen sich auch kostengünstigere Lackschichten von 30 bis 60 $\mu$m aufbringen. Die verschiedenen Schichtmodifikationen gestatten dann den Einsatz der Magnete jeweils bis zu bestimmten Feuchte- und Temperaturgrenzen. Das Aufbringen der Korrosionsschichten erfordert in jedem Fall aufwendige und damit kostspielige Präparationsmethoden und Verfahren. Insbesondere ergibt sich ein relativ hoher Kostenanteil für das zuverlässige Beschichten von Kleinteilen, wie sie bevorzugt in dieser Materialmodifikation wegen ihrer hohen magnetischen Effizienz zum Einsatz kommen.

Zudem vermindern dicke Beschichtungen aufgrund ihres relativ hohen Volumenanteils auch die Effizienz des Dauermagneten im System.

Einen Überblick über den aktuellen Stand zum Korrosionsschutz von NdFeB-Magneten liefert "Feasibility Study of a Method to Obtain Corrosion Protection of the NdFeB-Type Magnet", S. Tori, G. Bava and Co-workers in: Concerted European Action on Magnets (CEAM) Elsevier Applied Science, London, New York, 1989, Seite 628.

In der EP 0 311 049 A2 wird eine Magnetlegierung mit einer Zusammensetzung von 10 bis 25 at% SE (SE = Y oder ein Lanthanoid), 2 bis 20 at% B, 55 bis 88 at% FE, Co und Ni, wobei die Anteile 10 bis 73 at% Fe, 7 bis 50 at% Co und 5 bis 30 at% Ni betragen, vorgeschlagen, bei der das Eisen ersetzende Anteil von Cobalt und Nickel die geforderte Korrosionsresistenz gewährleisten soll.

In der DE 36 37 521 A1 wird zur Stabilisierung der magnetischen Eigenschaften die Beigabe von Sauerstoff beschrieben, der nach dem Sintervorgang auf etwa 0,6 bis 1,3 Gew.-% begrenzt sein soll.

Der Erfindung liegt die Aufgabe zugrunde, einen NdFeB-Magneten und ein Verfahren zu seiner Oberflächenpassivierung zu schaffen, der bzw. das die Rostanfälligkeit der NdFeB-Magnete durch einfache Maßnahmen deutlich verringert, so daß sich die für viele Anwendungen nach dem Stand der Technik bekannte aufwendige und teure Beschichtung erübrigt. Gleichermaßen soll die Effizienz des Dauermagneten möglichst gering durch die Oberfläche gemindert werden.

Die Aufgabe wird durch den im Anspruch 1 angegebenen Magneten gelöst. Die $\alpha$-Fe$_2$O$_3$-Oberflächenschicht, die vorzugsweise zwischen 1 bis 3 $\mu$m dick ist, verhindert wirksam die Rostbildung. Vorteilhafterweise ist die $\alpha$-Fe$_2$O$_3$-Schicht auch gegenüber saurer und oxidierender Atmosphäre widerstandsfähig.

Die auf das Verfahren bezogene Aufgabe wird durch die im Anspruch 3 dargestellten Maßnahmen gelöst. Die durch die Wärmebehandlung erreichte Passivierung unterdrückt die ansonsten in feuchter Atmosphäre übliche schnelle Rostbildung, so daß sich bei den hergestellten Magneten gegenüber nichtbehandelten deutliche Vorteile ergeben.

Weitere bevorzugte Maßnahmen sind in den Ansprüchen 4 bis 11 beschrieben.

Insbesondere werden die NdFeB-Magnete nach der mechanischen Oberflächenbehandlung, wie Schleifen, Läppen, Strahlen oder Honen, bei Tempraturen zwischen 700 und der bei ca. 1090 ± 20 °C liegenden Sintertemperatur einer Glühbehandlung im Vakuum unterzogen und anschließend einer oxidierenden Atmosphäre ausgesetzt, was in ein und demselben Behandlungsgefäß vorgenommen werden kann. Als oxidierende Atmosphären werden bevorzugt Inertgas-Sauerstoff-Gemische mit Sauerstoffgehalten zwischen 10 und 25 Vol.-% oder getrocknete Luftmischungen verwendet. Nach einer Weiterbildung der Erfindung werden die Magnete der oxidierenden Atmosphäre 0,5 bis 15 min ausgesetzt, bevorzugt 2 bis 5 min, und/oder Dicken der Passivierungsschicht 0,5 bis 5 $\mu$m, vorzugsweise zwischen 1 bis 3 $\mu$m aufgetragen. Hierbei tritt vorzugsweise keine Beeinträchtigung der magnetischen Eigenschaften auf. Etwa bei der Glühbehandlung auftretende Risse oder Spalte in der Oberflächenschicht werden durch Kitt oder Kleber versiegelt, so daß sich auch dort keine Angriffsflächen, insbesondere für etwaige Rostbildung, bieten.

Die nach der vorliegenden Erfindung oberflächenpassivierten NdFeB-Proben zeigen in feuchter Umgebung ein wesentlich besseres Verhalten als unbehandelte geschliffene Magnete, wie die beiliegende Tabelle 1 darlegt. Die in dieser Tabelle dargestellten Untersuchungsergebnisse beschreiben die durch die Oberflächenpassivierung erzielte verbesserte Korrosionsresistenz der NdFeB-Magnete. Ohne aufwendige Beschichtungen lassen sich danach oberflächenpassivierte NdFeB-Magnete auch dort einsetzen, wo unbeschichtete geschliffene Magnete infolge ihres schnellen und starken Rostens zu Problemen führten. Die Rostanfälligkeit dieser Materialien wird deutlich verringert und ist vergleichbar der anderer in magnetischen Kreisen zum Einsatz kommender Werkstoffe.

Das leichte Rosten oberflächenpassivierter NdFeB-Magnete bei langer Auslagerung oder bei erhöhter Temperatur resultiert aus den dünnen Rissen einer Breite zwischen 0,5 bis 3 $\mu$m in den Oberflächenschichten, in die Feuchtigkeit eindringen kann. Die dortige Korrosion wird vorzugsweise dadurch verhindert, daß die Risse mit Kitt oder Kleber ausgefüllt werden, so daß der Werkstoff auch insoweit versiegelt ist. Ein Aufbrechen oder Abplatzen der Oberflächenschicht infolge der in den Spalten eindringenden Feuchte wurde in keinem Fall, auch nicht nach langer Auslagerung, beobachtet.

Tabelle 1

| Auslagerung 25 °C / 100% Feuchte | | | |
|---|---|---|---|
| Oberflächenzustand | 5 h | 100 h | 500 h | 2000 h |
| Magnet blank | vereinzelt feine Rostflecken | deutliche Rostflecken | durchgehender Rostüberzug; Rostpickel | fortschreitendes Rosten, Wachsen der Erhebungen |
| Magnet passiviert | kein Rost | kein Rost | kein Rost | vereinzelt leichte Rostspuren |
| Auslagerung 40 °C / 100% Feuchte | | | |
| Oberflächenzustand | 2 h | 100 h | 500 h | 2000 h |
| Magnet blank | erste deutliche Rostflecken und Pickel | durchgehender starker Rostüberzug | zunehmender Rost, Pickel, Oberflächenunebenheiten | starke Rostzunahme |
| Magnet passiviert | kein Rost | vereinzelt leichte Rostspuren | leiche Rostspuren | nahezu gleichbleibender Zustand |
| Auslagerung 60 °C / 100% Feuchte | | | |
| Oberflächenzustand | 1/2 h | 100 h | 500 h | 2000 h |
| Magnet blank | deutlicher Rostbelag auf der gesamten Oberfläche | durchgehend dicker Rostbelag, Oberflächenunebenheiten | starke Probenschädigung durch fortschreitendes Rosten | fortschreitende Schädigung der Magnete |
| Magnet passiviert | kein Rost | vereinzelte Rostspuren | leichte Zunahme des Rostes | weitere leichte Zunahme des Rostens |

**Ansprüche**

1. Dauermagnet auf der Basis von NdFeB, bestehend aus 28 bis 35 Gew.-% Nd, das teilweise durch ein anderes SE-Metall ersetzt sein kann, 0,9 bis 1,2 Gew.-% B, Rest Fe, gekennzeichnet durch eine $\alpha$-$Fe_2O_3$-Beschichtung einer Dicke von 0,5 bis 5 $\mu$m.

2. Dauermagnet nach Anspruch 1, dadurch gekennzeichnet, daß die Dicke der Beschichtung zwischen 1 und 3 $\mu$m liegt.

3. Verfahren zur Oberflächenpassivierung von Dauermagneten auf der Basis von NdFeB nach Anspruch 1 oder 2 durch Beschichtung, dadurch gekennzeichnet, daß die oberflächenbehandelten Magnete einer Glühbehandlung in oxidierender Atmosphäre bei Temperaturen zwischen 600 °C und ihrer Sintertemperatur und ausgesetzt werden.

4. Verfahren nach Anspruch 3, dadurch gekennzeichnet, daß die Magnete mechanisch oberflächenbehandelt werden.

5. Verfahren zur Oberflächenpassivierung nach Ansprüchen 3 oder 4, dadurch gekennzeichnet, daß die Glühbehandlung in oxidierender Atmosphäre im Anschluß an eine Glühbehandlung im Vakuum bei Temperaturen oberhalb von 600 °C durchgeführt wird.

6. Verfahren zur Oberflächenpassivierung nach Anspruch 5, dadurch gekennzeichnet, daß die Glühbehandlung in oxidierender Atmosphäre im Anschluß an eine Glühbehandlung im Vakuum bei Temperaturen oberhalb von 800 °C durchgeführt wird.

7. Verfahren zur Oberflächenpassivierung nach einem der Ansprüche 3 bis 6, dadurch gekennzeichnet, daß als oxidierende Atmosphäre trockene Luft, Kohlendioxid und/oder trockene Inertgas-Sauerstoff-Gemische eingesetzt werden.

8. Verfahren zur Oberflächenpassivierung nach Anspruch 7, dadurch gekennzeichnet, daß trockene Luft oder trockene Inertgas-Sauerstoffgemische mit $O_2$-Gehalten zwischen 10 bis 25 Vol.-% eingesetzt werden.

9. Verfahren zur Oberflächenpassivierung nach einem der Ansprüche 3 bis 8, dadurch gekennzeichnet, daß die Magnete der oxidierenden Atmosphäre 0,5 bis 15 min ausgesetzt werden.

10. Verfahren zur Oberflächenpassivierung nach Anspruch 9, dadurch gekennzeichnet, daß die Magnete der oxidierenden Atmosphäre 2 bis 5 min ausgesetzt werden.

11. Verfahren zur Oberflächenpassivierung nach einem der Ansprüche 3 bis 10, dadurch gekennzeichnet, daß auftretende Risse oder Spalte in der Oberflächenschicht durch Kitt oder Kleber versiegelt werden.

**Europäisches Patentamt**

# EUROPÄISCHER RECHERCHENBERICHT

Nummer der Anmeldung

EP 90 10 5068

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 289 599 (NAMIKI PRECISION JEWEL CO., LTD) * Ansprüche 1,2,5; Seite 6, Beispiel 1 * | 1-4,7 | H 01 F 1/053 H 01 F 41/02 |
| A | PATENT ABSTRACTS OF JAPAN, Band 12, Nr. 261 (E-636)[3108], 22. Juli 1988; & JP-A-63 46 714 (SEIKO EPSON CORP.) 27-02-1988 | 1-3 | |
| A | EP-A-0 190 461 (SUMITOMO SPECIAL METALS CO., LTD) * Ansprüche 1,2,13,14,19,20 * | 1,3,11 | |

| | | | RECHERCHIERTE SACHGEBIETE (Int. Cl.5) |
|---|---|---|---|
| | | | H 01 F |

Der vorliegende Recherchenbericht wurde für alle Patentansprüche erstellt

| Recherchenort | Abschlußdatum der Recherche | Prüfer |
|---|---|---|
| DEN HAAG | 03-07-1990 | DECANNIERE L.J. |